# EUROPEAN PATENT SPECIFICATION

(11) **EP 3 116 277 B1**
(45) Date of publication and mention of the grant of the patent: **27.11.2019**
(21) Application number: 15758900.3
(22) Date of filing: 16.01.2015
(51) Int. Cl.: H04W 72/04, H04W 4/00, H04W 72/08, G08G 1/16, H04L 29/08, H04W 28/02, H04L 12/851, H04L 12/70, H04W 4/46, H04W 4/48, H04L 12/801, H04L 12/825

(54) **COMMUNICATION APPARATUS, CONGESTION CONTROL METHOD, AND STORAGE MEDIUM**
KOMMUNIKATIONSVORRICHTUNG, ÜBERLASTUNGSSTEUERUNGSVORRICHTUNG UND SPEICHERMEDIUM
APPAREIL DE COMMUNICATION, PROCÉDÉ DE COMMANDE D'ENCOMBREMENT ET SUPPORT D'ENREGISTREMENT

(30) Priority: 04.03.2014 JP 2014041314
(43) Date of publication of application: 11.01.2017
(73) Proprietor: NEC Corporation, Tokyo 108-8001 (JP)
(72) Inventor: YAMAMOTO, Takeshi, Tokyo 108-8001 (JP)
(74) Representative: Vossius & Partner Patentanwälte Rechtsanwälte mbB
(86) International application number: PCT/JP2015/051036
(87) International publication number: WO 2015/133182

(56) References cited:
- WO-A1-2009/107297
- US-A1- 2010 312 432
- "Intelligent Transport Systems (ITS); Users and applications requirements; Part 1: Facility layer structure, functional requirements and specifications", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ITS WG1, no. V1.1.1, 31 August 2013 (2013-08-31), XP014156972,
- ETSI: 'INTELLIGENT TRANSPORT SYSTEMS (ITS); VEHICULAR COMMUNICATIONS;BASIC SET OF APPLICATIONS;PART 2: SPECIFICATION OF COOPERATIVE AWARENESS BASIC SERVICE' ETSI TS 102 637-2 V1.1.1 April 2010, pages 1 - 22, XP055358069
- 'INTELLIGENT TRANSPORT SYSTEMS (ITS); VEHICULAR COMMUNICATIONS;BASIC SET OF APPLICATIONS; PART 3: SPECIFICATIONS OF DECENTRALIZED ENVIRONMENTAL NOTIFICATION BASIC SERVICE' ETSI TS 102 637-3 V1.1.1 September 2010, page 9,10,13, XP055358073

## Description

### Technical Field

The present invention relates to a communication apparatus, congestion control method and program, in particular relating to a communication apparatus, congestion control method and program for controlling congestion.

### Background Art

There have been known systems such as vehicle-to-vehicle communication systems in which onboard communication devices mounted on vehicles communicate with one another, and roadside-to-vehicle communication systems in which onboard communication devices mounted on vehicles and roadside communication devices installed in the roadside communicate with one another.

In the vehicle-to-vehicle communication system and roadside-to-vehicle communication system, for example DENMs (Decentralized Environmental Notification Message) and CAMs (Cooperative Awareness Message) are used.

A DENM is a message that notifies the occurrence of a predetermined event (such as heavy braking, and activation of hazard flashers) to communication apparatuses that are present within a predetermined range. A DENM is repeatedly transmitted within a predetermined period of time in accordance with the occurrence of a predetermined event. In the DENM, a transmission condition (such as a required transmission distance and a required transmission delay) is set according to the predetermined event.

On the other hand, a CAM is a message that notifies surrounding communication units of the position and speed of the vehicle. A CAM is repeatedly transmitted without regard to occurrence of events. In the CAM, a transmission condition that has been set in the DENM, based on an event, is not set.

When a message such as a DENM, a CAM or the like is frequently transmitted/received, congestion will cause.

Patent Document 1 describes an onboard communication apparatus that can avoid congestion. The onboard communication apparatus described in Patent Document 1 performs congestion control by controlling the transmission interval of messages, transmission power of messages and reception sensitivity of messages in accordance with the usage ratio of communication channels. In general, the greater the transmission power of a message, the longer is the message that can be transmitted.

### Related Art Documents

Patent Document 1: WO2009/133740A1
Patent Document 2: US 2010/312432 A1 relates to an on-vehicle communication device for suppressing a delay in providing information, avoiding congestion, and securing transmission power.

Document: "Intelligent Transport Systems (ITS); Users and applications requirements; Part 1: Facility layer structure, functional requirements and specifications", TECHNICAL SPECIFICATION, EUROPEAN TELECOMMUNICATIONS STANDARDS INSTITUTE (ETSI), 650, ROUTE DES LUCIOLES; F-06921 SOPHIA-ANTIPOLIS; FRANCE, vol. ITS WG1, no. V1.1.1, 31 August 2013, XP014156972" pages 35-36 Section 7.1.1 relates to application support facilities functional requirements and, more specifically, to DEN basic service.

### Disclosure of the Invention

### Problems to be Solved by the Invention

The onboard communication apparatus described in Patent Document 1 performs congestion control without regard to the type of the message (e.g., DENM, CAM).

In this congestion control, regarding a message, such as a CAM, to which a transmission condition is not set, there will be no problem as regards transmission conditions.

However, in this congestion control, regarding a message, such as a DENM, to which a transmission condition is set, since a transmission condition is not taken into account, there occur cases in which the transmission condition (e.g., required transmission distance) cannot be fulfilled. If the transmission condition is not satisfied, there occurs a situation in which the transmitted message cannot be delivered to the target communication partner.

Accordingly, the onboard communication apparatus according to Patent Document 1 has the problem in which a message that cannot be delivered to the communication partner occurs according to congestion control and the occurrence of the message depends on the type of the message.

The object of the present invention is achieved by the subject-matter of the independent claims and provides a communication apparatus, congestion control method and program that can solve the above problem.

### Effect of the Invention

According to the present invention, it is possible to prevent occurrence of non-delivery of a message to the entity at the end of communication depending on the type of the message under congestion control.

### Brief Description of the Drawings

[FIG. 1] A diagram showing a communication apparatus of the first exemplary embodiment of the present invention.
[FIG. 2] A flow chart for illustrating the operation of communication apparatus 1.
[FIG. 3] A diagram showing communication apparatus 10 of the second exemplary embodiment of the present invention.
[FIG. 4] A flow chart for illustrating the operation of communication apparatus 10.

### Mode for Carrying Out the Invention

Now, the exemplary embodiments of the present invention will be described with reference to the drawings.

### (First Exemplary Embodiment)

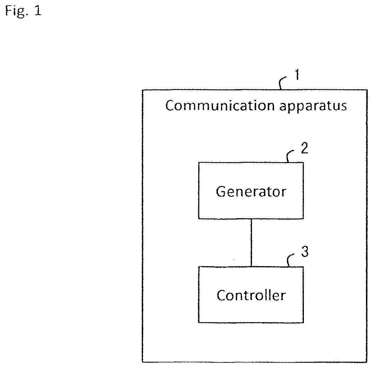

FIG. 1 is a diagram showing a communication apparatus according to the first exemplary embodiment.

In FIG. 1, communication apparatus 1 includes generator 2 and controller 3.

Communication apparatus 1 is, for example, mounted on a vehicle to perform vehicle-to-vehicle communication or roadside-to-vehicle communication. Generator 2 generates messages to be transmitted. Controller 3 controls transmission of messages to be transmitted to perform a congestion control operation in which congestion is controlled. Controller 3 controls the congestion control operation in accordance with the type of the message to be transmitted.

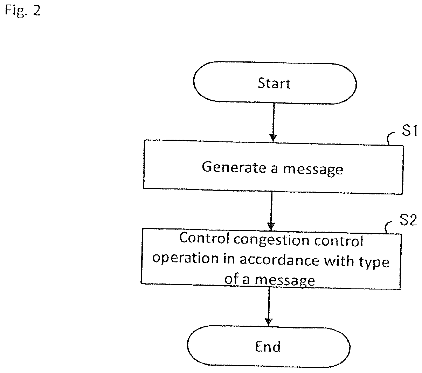

FIG. 2 is a flow chart for illustrating the operation of communication apparatus 1.

When a message to be transmitted is generated (Step S1), generator 2 outputs the message to be transmitted, to controller 3.

When the message to be transmitted is received, controller 3 controls the congestion control operation in accordance with the type of the message to be transmitted (Step S2).

Next, the effect of the present exemplary embodiment will be described.

According to the present exemplary embodiment, generator 2 generates a message to be transmitted. Controller 3 controls the congestion control operation in accordance with the type of the message to be transmitted. Thus, at the congestion control, transmission of a message to be transmitted is controlled in accordance with the type of the message to be transmitted. Accordingly, it is possible to prevent failure a message, that is provided with congestion control, to the communication partner from arriving, based on congestion control, depending on the type of the message to be transmitted.

### (Second Exemplary Embodiment)

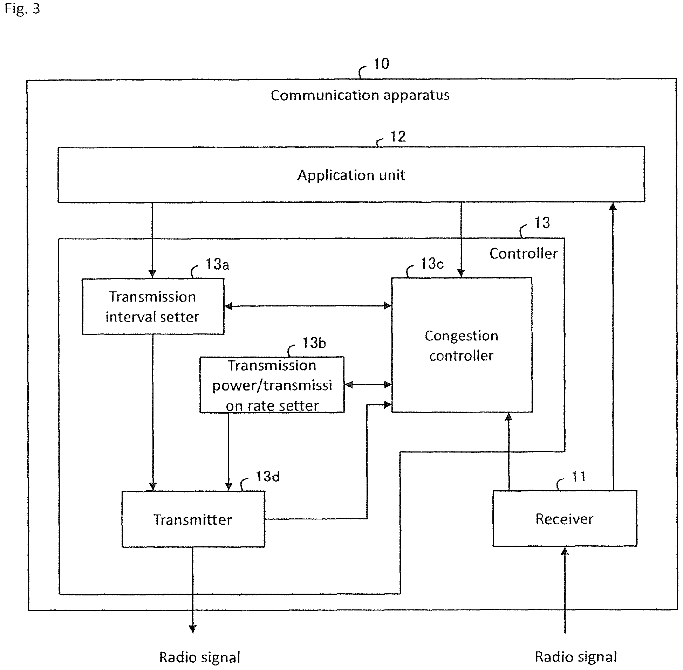

FIG. 3 is a diagram showing communication apparatus 10 according to the second exemplary embodiment of the present invention.

In FIG. 3, communication apparatus 10 includes receiver 11, application unit 12 and controller 13. Controller 13 includes transmission interval setter 13a, transmission power/transmission rate setter 13b, congestion controller 13c and transmitter 13d.

Communication apparatus 10 is, for example, an onboard communication apparatus. Communication apparatus 10 is mounted on the vehicle, and performs vehicle-to-vehicle communication or roadside-to-vehicle communication with other communication apparatuses (e.g., other onboard communication apparatuses and roadside communication apparatuses).

Receiver 11 receives a message that is wirelessly transmitted from another communication device (e.g., CAM, DENM, unicast message as a message to be used for one-to-one communication). Receiver 11 outputs the message received from the other communication device to application unit 12.

Receiver 11 also determines the degree of congestion of the radio channel that is used for message communication (which will be simply referred to hereinbelow as the degree of congestion), based on the communication status of the message. Receiver 11 notifies the degree of congestion to congestion controller 13c.

Application unit 12 is one example of a generator.

Application unit 12 has a positioning function that measures a position. The positioning function of application unit 12 is a function that performs positioning by using, for example, GPS (Global Positioning System). Here, the positioning function of application unit 12 is not limited to the function using GPS, but can be changed as appropriate.

Further, application unit 12 detects events (e.g., heavy braking, activation of hazard flashers) that occur in the vehicle on which communication apparatus 10 is mounted (which will be referred to hereinbelow as "the vehicle").

For example, application unit 12 detects an event that occurs in the vehicle in the following manner. Application unit 12 receives event notice information that indicates an event that has occurred in the vehicle from the vehicle. Application unit 12 uses the event information notice to detect the event that has occurred in the vehicle. Here, the method in which application 12 detects an event that has occurred in the vehicle is not limited to the method of using the event notice information, but can be modified as appropriate.

Also, application unit 12 receives a message output from receiver 11. When a CAM is, for example, received, application unit 12 confirms the position of another onboard communication apparatus that is indicated by the CAM.

Application unit 12 generates, as the messages to be transmitted, multiple types of messages that are used in vehicle-to-vehicle communication or roadside-to-vehicle communication.

In this exemplary embodiment, application unit 12 generates a CAM, a DENM and a message (a unicast message) that is used for one-to-one communication, as multiple types of messages.

Application unit 12 generates a DENM that represents occurrence of a particular event according to occurrence of events such as, for example, heavy braking, activation of hazard flashers or the like (which will be referred to hereinbelow as "particular event").

Application unit 12 has pre-stored transmission conditions (e.g., transmission distance, transmission delay time) corresponding to particular events, for each particular event.

For example, application unit 12 has pre-stored communication distance A1 to be required for communication and delay time B1 to be required for communication, as the transmission conditions corresponding to the event "heavy braking" that is one example of particular events. Application unit 12 has pre-stored communication distance A2 to be required for communication and delay time B2 to be required for communication, as the transmission conditions corresponding to the event "activation of hazard flashers" that is one example of particular events.

Hereinbelow, the communication distance to be required for communication will be called "required communication distance". The required communication distance is one example of the transmission distance that is a transmission condition. In the present exemplary embodiment, it is assumed that the transmission power (which will be referred to hereinbelow as "required transmission power") corresponding to the required communication distance is lower than the maximum transmission power that is previously determined.

The delay time required for communication is referred to as "required delay time". The required delay time is one example of transmission delay time that is a transmission condition. In the present exemplary embodiment, it is assumed that the required delay time is longer than the time that is indicated by the shortest transmission interval that is previously determined.

Required transmission distance A1 may be equal to or different from required transmission distance A2. Required delay time B1 may be equal to or different from required delay time B2.

Application unit 12 intermittently generates a CAM that represents the position and velocity of the vehicle. Application unit 12 has not pre-stored any transmission conditions for a CAM.

Application unit 12 generates a unicast message when one-to-one communication is performed. Application unit 12 has stored transmission conditions corresponding to a unicast message (e.g., the rule that the distance to the communication partner is set as the required communication distance, and the required delay time).

Controller 13 performs a congestion control operation in which transmission of the message, that is to be transmitted and that is generated by application unit 12, is controlled to control a congestion. Controller 13 controls the congestion control operation in accordance with the type of the message to be transmitted.

In transmission interval setter 13a, the transmission interval for the message to be transmitted is set.

In transmission power/transmission rate setter 13b, transmission power and transmission rate of the message to be transmitted are set.

Congestion controller 13c performs the congestion control operation by controlling transmission of the message to be transmitted (e.g., transmission interval, transmission power, transmission rate) based on the type of the message to be transmitted and based on the degree of congestion that is reported from receiver 11.

Congestion controller 13c has pre-stored a correspondence table that indicates the relationship between transmission power and transmission distance. In the correspondence table, the transmission power becomes greater as the corresponding transmission distance becomes longer.

Transmitter 13d wirelessly transmits the message to be transmitted based on the transmission interval that is set in transmission interval setter 13a and based on the transmission power and the transmission rate that are set in transmission power/transmission rate setter 13b.

Next, the operation will be described.

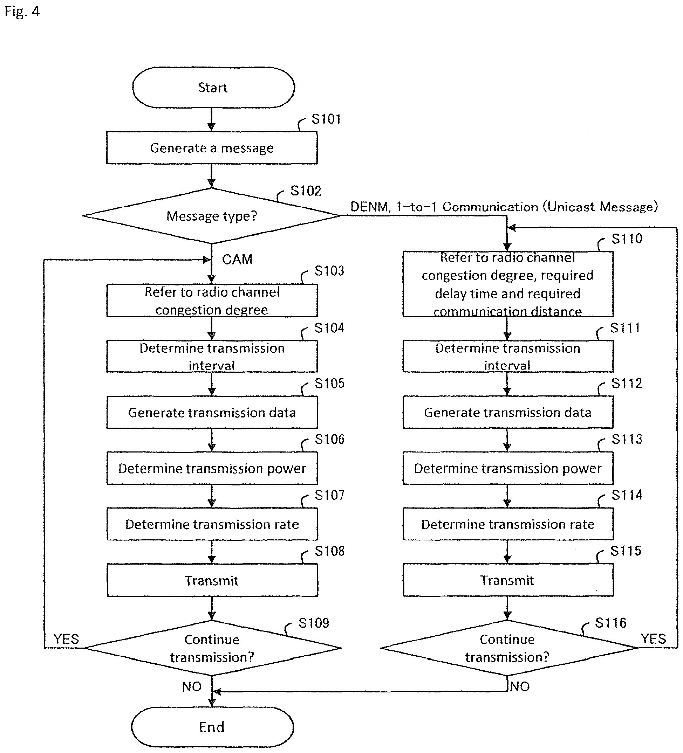

FIG. 4 is a flow chart for illustrating the operation of communication apparatus 10.

When a message to be transmitted (Step S101) is generated, application unit 12 outputs the message to be transmitted to transmission interval setter 13a and outputs the message type information that represents the type of the message to be transmitted to congestion controller 13c.

When the type of the message to be transmitted is a DENM or a unicast message, application unit 12 also outputs the transmission conditions for the message to be transmitted to congestion controller 13c. For example, when the message to be transmitted is a DENM, application unit 12 outputs, to congestion controller 13d, the transmission conditions according to the particular event that is indicated by the DENM.

Application unit 12 uses, as the transmission conditions for the message to be transmitted, the required communication distance information that represents a required communication distance and the required delay time information that represents required delay time. Here, when the type of the message to be transmitted is a unicast message, application unit 12 uses, as the required communication distance, the distance between the position of the communication partner, that is represented by the CAM that is transmitted by the communication partner, and the position of communication apparatus 10 that is measured by application unit 12.

When a message to be transmitted is received, transmission interval setter 13a holds the message to be transmitted.

When the message type information is received, congestion controller 13c determines whether the type of the message to be transmitted is a CAM, a DENM or a unicast message (Step S102).

When the type of the message to be transmitted is a CAM, congestion controller 13c refers to the degree of congestion of radio channel notified from receiver 11 (Step S103).

Subsequently, congestion controller 13c determines, based on the degree of congestion of radio channel, the transmission interval of the message to be transmitted (Step S104).

For example, when the degree of congestion of radio channel is equal to or lower than the predetermined congestion threshold, congestion controller 13c determines the shortest transmission interval as the transmission interval of the message to be transmitted.

On the other hand, when the degree of congestion of radio channel is higher than the congestion threshold, congestion controller 13c determines, as the transmission interval for the message to be transmitted, an interval that is longer by the prescribed time than the transmission interval that is currently set in transmission interval setter 13a. Here, in the case where no transmission interval is set in transmission interval setter 13a, congestion controller 13c determines, as the transmission interval for the message to be transmitted, the interval that is longer by the prescribed time than the shortest transmission interval.

Subsequently, congestion controller 13c sets up, as the transmission interval for the message to be transmitted, the transmission interval that is determined at Step S104 in transmission interval setter 13a.

When the transmission interval for the message to be transmitted is set, transmission interval setter 13a generates copies of the message to be transmitted (which will be referred to hereinbelow as "transmission data") by copying the hold message to be transmitted at time interval that is represented by transmission interval thereof (Step S105).

Subsequently, transmission interval setter 13a outputs transmission data to transmitter 13d.

On the other hand, when the transmission interval is set in transmission interval setter 13a, congestion controller 13c determines the transmission power of the message to be transmitted based on the degree of congestion of the radio channel (Step S106).

For example, when the degree of congestion of the radio channel is equal to or lower than the congestion threshold, congestion controller 13c determines the maximum transmission power as the transmission power for the message to be transmitted.

On the other hand, when the degree of congestion of the radio channel is higher than the congestion threshold, congestion controller 13c determines, as the transmission power for the message to be transmitted, the transmission power that is lower by a predetermined amount than the transmission power that is currently set in transmission power/transmission rate setter 13b. Here, in the case where no transmission power has been set in transmission power/transmission rate setter 13b, congestion controller 13c determines, as the transmission power for the message to be transmitted, the transmission power that is lower by the prescribed amount than the maximum transmission power.

Then, congestion controller 13c sets, as the transmission power for the message to be transmitted, the transmission power that is determined at Step S106 in transmission power/transmission rate setter 13b.

Subsequently, congestion controller 13c determines, based on the degree of congestion of the radio channel, the transmission rate of the message to be transmitted (Step S107).

For example, when the degree of congestion of the radio channel is equal to or lower than the congestion threshold, congestion controller 13c determines the predetermined lowest transmission rate (which will be referred to hereinbelow as "the lowest transmission rate") as the transmission rate of the message to be transmitted.

When the degree of congestion of the radio channel is higher than the congestion threshold, congestion controller 13c determines, as the transmission rate for the message to be transmitted, a transmission rate that is higher by a prescribed amount than the transmission rate that is currently set in transmission power/transmission rate setter 13b. Here, in the case where no transmission rate has been set in transmission power/transmission rate setter 13b, congestion controller 13c determines, as the transmission rate for the message to be transmitted, the transmission rate that is higher by a prescribed amount than the lowest transmission rate.

Next, congestion controller 13c sets, as the transmission rate for the message to be transmitted, the transmission rate that is determined at Step S107 in transmission power/transmission rate setter 13b.

When transmission data is received from transmission interval setter 13a, transmitter 13d transmits the transmission data based on the transmission power and the transmission rate that are set in transmission power/transmission rate setter 13b (Step S108). Here, if the transmission power and transmission rate have not been set in transmission power/transmission rate setter 13b when transmitter 13d receives the transmission data from transmission interval setter 13a, transmitter 13d will not transmit the received data.

Subsequently, transmitter 13d outputs, to congestion controller 13c, a transmission notice that notifies that transmission data has been transmitted.

When the transmission notice is received, congestion controller 13c determines whether or not the elapsed time from the reception of the message type information exceeds the predetermined transmission continuation time (Step S109).

If it is determined that the elapsed time does not exceed the transmission continuation time at Step S109, congestion controller 13c returns the control to Step S103.

If it is determined that the elapsed time exceeds the transmission continuation time at Step S109, congestion controller 13c deletes the message to be transmitted that is held in transmission interval setter 13a. Then, congestion controller 13c deletes both the transmission interval that is set in transmission interval setter 13a and transmission power and transmission rate that are set in transmission power/transmission rate setter 13b to end the congestion control operation.

On the other hand, when the type of the message to be transmitted is determined to be of DENM or unicast message at Step S102, congestion controller 13c refers to the degree of congestion of the radio channel and transmission conditions (required communication distance information and required delay time information) (Step S110).

Subsequently, congestion controller 13c determines, based on the degree of congestion of the radio channel and the transmission conditions, the transmission interval of the message to be transmitted (Step Sill).

For example, when the degree of congestion of the radio channel is equal to or lower than the congestion threshold, congestion controller 13c determines the shortest transmission interval as the transmission interval for the message to be transmitted.

On the other hand, when the degree of congestion of the radio channel is higher than the congestion threshold, congestion controller 13c, first, identifies an interval (which will be referred to hereinbelow as "transmission interval candidate") that is longer by the prescribed time than the transmission interval that is currently set in transmission interval setter 13a.

Then, when the time (interval) that is represented by the transmission interval candidate is shorter than the required delay time that is represented by the required delay time information, congestion controller 13c determines the transmission interval candidate as the transmission interval for the message to be transmitted. On the other hand, when the time (interval) that is represented by the transmission interval candidate is equal to or longer than the required delay time, congestion controller 13c determines the required delay time as the transmission interval for the message to be transmitted. This means that the maximum of the transmission interval is limited by the required delay time.

In this exemplary embodiment, the required delay time, the shortest transmission interval and the prescribed time have the following relationship:
"the required delay time" > "the shortest transmission interval" + "the prescribed time".

In a situation where no transmission interval has been set in transmission interval setter 13a, congestion controller 13c determines, as the transmission interval for the message to be transmitted, the interval that is longer by the prescribed time than the shortest transmission interval.

Subsequently, congestion controller 13c sets, as the transmission interval for the message to be transmitted, the transmission interval that is determined at Step Sill in transmission interval setter 13a.

When the transmission interval for the message to be transmitted is set, transmission interval setter 13a performs Step S112. The procedure at Step S112 is the same as that at Step S105. Accordingly, detailed description on the procedure at Step S112 is omitted.

When the transmission interval is set in transmission interval setter 13a, congestion controller 13c determines the transmission power of the message to be transmitted based on the degree of congestion of the radio channel and the transmission conditions (Step S113).

For example, when the degree of congestion of the radio channel is equal to or lower than the congestion threshold, congestion controller 13c determines the maximum transmission power as the transmission power for the message to be transmitted.

On the other hand, when the degree of congestion of the radio channel is higher than the congestion threshold, congestion controller 13c, at first, specifies transmission power (which will be referred to hereinbelow as "transmission power candidate") that is lower by the prescribed amount than the transmission power that is currently set in transmission power/transmission rate setter 13b.

Then, congestion controller 13c refers to the correspondence table to specify the required transmission power that corresponds to the required transmission distance that is represented by the required transmission distance information.

Subsequently, when the transmission power that is represented by the transmission power candidate is higher than the required transmission power, congestion controller 13c determines the transmission power candidates as the transmission power for the message to be transmitted. On the other hand, when the transmission power that is represented by the transmission power candidate is equal to or lower than the required transmission power, congestion controller 13c determines the required transmission power as the transmission power of the message to be transmitted. This means that the minimum of the transmission power is limited by the required communication distance.

In the present exemplary embodiment, the required transmission power, the maximum transmission power and the prescribed amount have the following relationship:
"the required transmission power " < "the maximum transmission power " - "the prescribed amount".

In a situation where no transmission power has been set in transmission power/transmission rate setter 13a, congestion controller 13c determines, as the transmission power of the message to be transmitted, the transmission power that is obtained by subtracting the prescribed amount from the maximum transmission power.

Subsequently, congestion controller 13c sets, as the transmission power of the message to be transmitted, the transmission power that is determined at Step S113 in transmission power/transmission rate setter 13b.

Then, congestion controller 13c determines, based on the degree of congestion of the radio channel, the transmission rate of the message to be transmitted (Step S114). The procedure at Step S114 is the same as that at Step S107. Accordingly, detailed description on the procedure at Step S114 is omitted.

Subsequently, congestion controller 13c sets, as the transmission rate of the message to be transmitted, the transmission rate that is determined at Step S114 in transmission power/transmission rate setter 13b.

When the transmission data is received from transmission interval setter 13a, transmitter 13d performs Step S115. The procedure at Step S115 is the same as that at Step S108. Accordingly, detailed description on the procedure at Step S115 is omitted.

Next, transmitter 13d outputs a transmission notice to congestion controller 13c.

When the transmission notice is received, congestion controller 13c performs Step S116. The procedure at Step S116 is the same as that at Step S108. Accordingly, detailed description on the procedure at Step S116 is omitted.

If it is determined that the elapsed time does not exceed the transmission continuation time at Step S116, congestion controller 13c returns the control to Step S111.

On the other hand, if it is determined that the elapsed time exceeds the transmission continuation time at Step S116, congestion controller 13c deletes the message to be transmitted that is held in transmission interval setter 13a. Then, congestion controller 13c deletes both the transmission interval that is set in transmission interval setter 13a and the transmission power and transmission rate that are set in transmission power/transmission rate setter 13b to end the congestion control operation.

Next, the effect of the present exemplary embodiment will be described.

Controller 13 changes the method for transmitting a message in the congestion control operation in accordance with the type of the message to be transmitted. Therefore, it is possible to convert the transmission method of the message in the congestion control operation into a transmission method that corresponds to the type of the message to be transmitted. Accordingly, it is possible to prevent failure of a message, that is provided with congestion control, to the communication partner from arriving, based on congestion control, depending on the type of the message to be transmitted.

Controller 13 changes the transmission method of the message in the congestion control operation in accordance with whether or not the message to be transmitted has transmission conditions. As a result, it is possible to change, at the time of congestion control, the transmission method of the message in response to the presence or absence of transmission conditions.

Controller 13 performs congestion control for a message that has transmission conditions by controlling transmission of the message based on the degree of congestion of the communication and the transmission conditions. Controller 13 performs congestion control for a message without transmission conditions by controlling transmission of the message based on the degree of congestion of the communication. As a result, it is possible to perform, for a message that has transmission conditions, congestion control in which the transmission conditions is taken into account, and to perform, for a message without transmission conditions, congestion control in which the transmission conditions is not taken into account.

Next, variations of the present exemplary embodiment will be described.

In the present exemplary embodiment, both the transmission distance and the transmission delay time are used as the transmission conditions. However, either the transmission distance or the transmission delay time may be adopted as the transmission conditions, or the transmission conditions may be modified appropriately.

The order of determination of the transmission interval, determination of the transmission power and determination of the transmission rate may be changed as appropriate.

In order to simplify congestion control operation, the transmission rate control may be omitted. Further, in order to simplify congestion control operation, either the transmission interval control or the transmission power control may be omitted.

In each of the above exemplary embodiments, the communication apparatus may be realized by a computer. In this case, the computer loads and executes the program recorded on a computer readable recording medium, such as CD-ROM (Compact Disk Read Only Memory), to perform the functions of the communication apparatus. The recording medium is not limited to CD-ROM, but can be changed as appropriate.

In each of the exemplary embodiments described above, the illustrated configuration is a mere example, hence the present invention should not be limited to these configurations.

Although the present invention has been explained with reference to the exemplary embodiments, the present invention should not be limited to these exemplary embodiments. Various modifications that can be understood by those skilled in the art may be made to the configurations and details of the present invention within the scope of the present invention.

### Description of Reference Numerals

- 1, 10: communication apparatus
- 2: generator
- 3: controller
- 11: receiver
- 12: application unit
- 13: controller
- 13a: transmission interval setter
- 13b: transmission power/transmission rate setter
- 13c: congestion controller
- 13d: transmitter

## Claims

1. A communication apparatus (1) comprising:
a generator (2) configured to generate a message to be transmitted;
wherein the message has a message type wherein the message type is at least one of a Cooperative Awareness Message, CAM, type of message and a Decentralized Environmental Notification Message, DENM, type of message;
wherein a DENM message type has transmission conditions and a CAM message type has no transmission conditions;
wherein the transmission conditions include a transmission distance and/or transmission delay time;
wherein the transmission conditions are pre-stored; and
wherein the DENM message type corresponds to particular events, the particular events being associated with the transmission conditions; a controller (3) configured to perform a congestion control operation in which transmission of the message to be transmitted is controlled to control a congestion and wherein the controller is configured to control the congestion control operation in accordance with the type of the message to be transmitted,
wherein:
the controller (3) is configured to change a method for transmitting the message in the congestion control operation in accordance with the type of message to be transmitted by changing at least one of a transmission interval, a transmission power and a transmission rate;
when the message to be transmitted is a DENM type message, the controller (3) is configured to perform the congestion control operation based on a degree of congestion of a radio channel that is used for message communication and the transmission conditions, and
when the message to be transmitted is a CAM type message, the controller (3) is configured to perform the congestion control operation based on the degree of congestion.

2. A congestion control method comprising:
generating (S101) a message to be transmitted;
wherein the message has a message type wherein the message type is at least one of a Cooperative Awareness Message, CAM, type of message and a Decentralized Environmental Notification Message, DENM, type of message;
wherein a DENM message type has transmission conditions and a CAM message type has no transmission conditions;
and wherein the transmission conditions include a transmission distance and/or transmission delay time;
wherein the transmission conditions are pre-stored; and
wherein the DENM message type corresponds to particular events, the particular events being associated with the transmission conditions;
performing a congestion control operation in which transmission of the message to be transmitted is controlled to control a congestion and
controlling (S102) the congestion control operation in accordance with the type of the message to be transmitted.
wherein the method further comprises:
changing, in the congestion control operation, a method for transmitting the message in accordance with the type of message to be transmitted by changing at least one of a transmission interval, a transmission power and a transmission rate,
when the message to be transmitted is a DENM type message, performing the congestion control operation based on a degree of congestion of a radio channel that is used for message communication and the transmission conditions, and
when the message to be transmitted is a CAM type message, performing the congestion control operation based on the degree of congestion.

3. A computer-readable recording medium recorded with a program that causes a computer to execute:
a generating procedure of generating (S101) a message to be transmitted;
wherein the message has a message type wherein the message type is at least one of a Cooperative Awareness Message, CAM, type of message and a Decentralized Environmental Notification Message, DENM, type of message;
wherein a DENM message type has transmission conditions and a CAM message type has no transmission conditions;
and wherein the transmission conditions include a transmission distance and/or transmission delay time;
wherein the transmission conditions are pre-stored; and
wherein the DENM message type corresponds to particular events, the particular events being associated with the transmission conditions;
an execution procedure of performing a congestion control operation in which transmission of the message to be transmitted is controlled to control a congestion; and
a control procedure of controlling (S102) the congestion control operation in accordance with the type of the message to be transmitted;
an execution procedure of changing, in the congestion control operation, a method for transmitting the message in accordance with the type of message to be transmitted by changing at least one of a transmission interval, a transmission power and a transmission rate,
when the message to be transmitted is a DENM type message, a control procedure of performing the congestion control operation based on a degree of congestion of a radio channel that is used for message communication and the transmission conditions, and
when the message to be transmitted is a CAM type message, a control procedure of performing the congestion control operation based on the degree of congestion.

## Patentansprüche

1. Kommunikationsvorrichtung (1), die aufweist:
einen Generator (2), der konfiguriert ist, eine zu sendende Nachricht zu erzeugen;
wobei die Nachricht einen Nachrichtentyp aufweist, wobei der Nachrichtentyp ein kooperativer Achtsamkeitsnachricht-, CAM, Nachrichtentyp und/oder ein dezentraler Umgebungsbenachrichtigungsnachricht-, DENM, Nachrichtentyp ist;
wobei ein DENM-Nachrichtentyp Sendebedingungen aufweist und ein CAM-Nachrichtentyp keine Sendebedingungen aufweist;
wobei die Sendebedingungen eine Sendeentfernung und/oder eine Sendeverzögerungszeit aufweisen;
wobei die Sendebedingungen vorgespeichert sind; und
wobei der DENM-Nachrichtentyp bestimmten Ereignissen entspricht, wobei die bestimmten Ereignisse mit den Sendebedingungen verbunden sind;
eine Steuereinrichtung (3), die konfiguriert ist, eine Überlastungssteuerungsoperation durchzuführen, in der die Sendung der zu sendenden Nachricht gesteuert wird, um eine Überlastung zu steuern, und wobei die Steuereinrichtung konfiguriert ist, die Überlastungssteuerungsoperation gemäß dem Typ der zu sendenden Nachricht zu steuern,
wobei:
die Steuereinrichtung (3) konfiguriert ist, ein Verfahren zum Senden der Nachricht in der Überlastungssteuerungsoperation gemäß dem Typ der zu sendenden Nachricht durch Ändern des Sendeintervalls und/oder einer Sendeleistung und/oder einer Senderate zu ändern;
wenn die zu sendende Nachricht eine DENM-Typ-Nachricht ist, die Steuereinrichtung (3) konfiguriert ist, die Überlastungssteuerungsoperation beruhend auf einem Grad der Überlastung eines Funkkanals, der zur Nachrichten-Kommunikation verwendet wird, und den Sendebedingungen durchzuführen, und wenn die zu sendende Nachricht eine CAM-Typ-Nachricht ist, die Steuereinrichtung (3) konfiguriert ist, die Überlastungssteuerungsoperation beruhend auf dem Grad der Überlastung durchzuführen.

2. Überlastungssteuerverfahren, das aufweist:
Erzeugen (S101) einer zu sendenden Nachricht;
wobei die Nachricht einen Nachrichtentyp aufweist, wobei der Nachrichtentyp ein kooperativer Achtsamkeitsnachricht-, CAM, Nachrichtentyp und/oder ein dezentraler Umgebungsbenachrichtigungsnachricht-, DENM, Nachrichtentyp ist;
wobei ein DENM-Nachrichtentyp Sendebedingungen aufweist und ein CAM-Nachrichtentyp keine Sendebedingungen aufweist;
und wobei die Sendebedingungen eine Sendeentfernung und/oder eine Sendeverzögerungszeit aufweisen;
wobei die Sendebedingungen vorgespeichert sind; und
wobei der DENM-Nachrichtentyp bestimmten Ereignissen entspricht, wobei die bestimmten Ereignisse mit den Sendebedingungen verbunden sind;
Durchführen einer Überlastungssteuerungsoperation, in der die Sendung der zu sendenden Nachricht gesteuert wird, um eine Überlastung zu steuern, und
Steuern (S102) der Überlastungssteuerungsoperation gemäß dem Typ der zu sendenden Nachricht,
wobei das Verfahren ferner aufweist:
Ändern in der Überlastungssteuerungsoperation eines Verfahrens zum Senden der Nachricht gemäß dem Typ der zu sendenden Nachricht durch Ändern des Sendeintervalls und/oder einer Sendeleistung und/oder einer Senderate,
wenn die zu sendende Nachricht eine DENM-Typ-Nachricht ist, Durchführen der Überlastungssteuerungsoperation beruhend auf einem Grad der Überlastung eines Funkkanals, der zur Nachrichten-Kommunikation verwendet wird, und den Sendebedingungen, und
wenn die zu sendende Nachricht eine CAM-Typ-Nachricht ist, Durchführen der Überlastungssteuerungsoperation beruhend auf dem Grad der Überlastung.

3. Computerlesbares Aufzeichnungsmedium, auf dem ein Programm aufgezeichnet ist, das einen Computer veranlasst auszuführen:
eine Erzeugungsprozedur zum Erzeugen (S101) einer zu sendenden Nachricht;
wobei die Nachricht einen Nachrichtentyp aufweist, wobei der Nachrichtentyp ein kooperativer Achtsamkeitsnachricht-, CAM, Nachrichtentyp und/oder ein dezentraler Umgebungsbenachrichtigungsnachricht-, DENM, Nachrichtentyp ist;
wobei ein DENM-Nachrichtentyp Sendebedingungen aufweist und ein CAM-Nachrichtentyp keine Sendebedingungen aufweist;
und wobei die Sendebedingungen eine Sendeentfernung und/oder eine Sendeverzögerungszeit aufweisen;
wobei die Sendebedingungen vorgespeichert sind; und
wobei der DENM-Nachrichtentyp bestimmten Ereignissen entspricht, wobei die bestimmten Ereignisse mit den Sendebedingungen verbunden sind;
eine Ausführungsprozedur zum Durchführen einer Überlastungssteuerungsoperation, in der die Sendung der zu sendenden Nachricht gesteuert wird, um eine Überlastung zu steuern; und
eine Steuerprozedur zum Steuern (S102) der Überlastungssteuerungsoperation gemäß dem Typ der zu sendenden Nachricht;
eine Ausführungsprozedur zum Ändern in der Überlastungssteuerungsoperation eines Verfahrens zum Senden der Nachricht gemäß dem Typ der zu sendenden Nachricht durch Ändern des Sendeintervalls und/oder einer Sendeleistung und/oder einer Senderate,
wenn die zu sendende Nachricht eine DENM-Typ-Nachricht ist, eine Steuerprozedur zum Durchführen der Überlastungssteuerungsoperation beruhend auf einem Grad der Überlastung eines Funkkanals, der zur Nachrichten-Kommunikation verwendet wird, und den Sendebedingungen, und wenn die zu sendende Nachricht eine CAM-Typ-Nachricht ist, eine Steuerprozedur zum Durchführen der Überlastungssteuerungsoperation beruhend auf dem Grad der Überlastung.

## Revendications

1. Dispositif de communication (1), comprenant :
un générateur (2) prévu pour générer un message à transmettre ;
où le message présente un type de message, le type de message étant un type de message de sensibilisation coopérative CAM et/ou un type de message de notification environnemental décentralisé DENM ;
où un type de message DENM présente des conditions de transmission, et un type de message CAM ne présente aucune condition de transmission ;
où les conditions de transmission comprennent une distance de transmission et/ou un délai de transmission ;
où les conditions de transmission sont pré-mémorisées ; et
où le type de message DENM correspond à des événements particuliers, lesdits événements particuliers étant associés aux conditions de transmission ; une unité de commande (3) prévue pour réaliser une opération de commande d'encombrement où la transmission du message à transmettre est activée pour commander un encombrement et où l'unité de commande est prévue pour commander l'opération de commande d'encombrement en fonction du type de message à transmettre,
où :
l'unité de commande (3) est prévue pour changer la méthode de transmission du message lors de l'opération de commande d'encombrement en fonction du type de message à transmettre par modification d'un intervalle de transmission et/ou d'une puissance de transmission et/ou d'un débit de transmission ;
si le message à transmettre est un type de message DENM, l'unité de commande (3) est prévue pour réaliser l'opération de commande d'encombrement sur la base d'un degré d'encombrement d'un canal radio utilisé pour la communication de message et des conditions de transmission, et, si le message à transmettre est un type de message CAM, l'unité de commande (3) est prévue pour réaliser l'opération de commande d'encombrement sur la base du degré d'encombrement.

2. Procédé de commande d'encombrement, comprenant :
la génération (S101) d'un message à transmettre ;
où le message présente un type de message, le type de message étant un type de message de sensibilisation coopérative CAM et/ou un type de message de notification environnemental décentralisé DENM ;
où un type de message DENM présente des conditions de transmission, et un type de message CAM ne présente aucune condition de transmission ;
et où les conditions de transmission comprennent une distance de transmission et/ou un délai de transmission ;
où les conditions de transmission sont pré-mémorisées ; et
où le type de message DENM correspond à des événements particuliers, lesdits événements particuliers étant associés aux conditions de transmission ;
la réalisation d'une opération de commande d'encombrement où la transmission du message à transmettre est activée pour commander un encombrement et
la commande (S102) de l'opération de commande d'encombrement en fonction du type de message à transmettre,
ledit procédé comprenant en outre :
le changement, lors de l'opération de commande d'encombrement, de méthode de transmission du message en fonction du type de message à transmettre par modification d'un intervalle de transmission et/ou d'une puissance de transmission et/ou d'un débit de transmission,
si le message à transmettre est un type de message DENM, la réalisation de l'opération de commande d'encombrement sur la base d'un degré d'encombrement d'un canal radio utilisé pour la communication de message et des conditions de transmission, et,
si le message à transmettre est un type de message CAM, la réalisation de l'opération de commande d'encombrement sur la base du degré d'encombrement.

3. Support d'enregistrement lisible par ordinateur, où est enregistré un programme lançant l'exécution par un ordinateur :
d'une procédure de génération (S101) d'un message à transmettre ;
où le message présente un type de message, le type de message étant un type de message de sensibilisation coopérative CAM et/ou un type de message de notification environnemental décentralisé DENM ;
où un type de message DENM présente des conditions de transmission, et un type de message CAM ne présente aucune condition de transmission ;
et où les conditions de transmission comprennent une distance de transmission et/ou un délai de transmission ;
où les conditions de transmission sont pré-mémorisées ; et
où le type de message DENM correspond à des événements particuliers, lesdits événements particuliers étant associés aux conditions de transmission ;
une procédure d'exécution d'une opération de commande d'encombrement où la transmission du message à transmettre est activée pour commander un encombrement ; et
une procédure de commande (S102) de l'opération de commande d'encombrement en fonction du type de message à transmettre ;
une procédure d'exécution d'un changement, lors de l'opération de commande d'encombrement, de méthode de transmission du message en fonction du type de message à transmettre par modification d'un intervalle de transmission et/ou d'une puissance de transmission et/ou d'un débit de transmission,
si le message à transmettre est un type de message DENM, une procédure de commande de l'opération de commande d'encombrement sur la base d'un degré d'encombrement d'un canal radio utilisé pour la communication de message et des conditions de transmission, et,
si le message à transmettre est un type de message CAM, une procédure de commande de l'opération de commande d'encombrement sur la base du degré d'encombrement.
